# EUROPEAN PATENT SPECIFICATION

(11) **EP 4 604 625 B1**
(45) Date of publication and mention of the grant of the patent: **19.08.2026**
(21) Application number: 25157455.4
(22) Date of filing: 12.02.2025
(51) Int. Cl.: H04W 52/02, H04W 68/02, H04W 76/28, H04W 72/23, H04W 68/00

(54) **DYNAMIC TRANSMISSION OF WAKE-UP SIGNAL**
DYNAMISCHE ÜBERTRAGUNG EINES AUFWECKSIGNALS
TRANSMISSION DYNAMIQUE DE SIGNAL DE RÉVEIL

(30) Priority: 16.02.2024 GB 202402198
(43) Date of publication of application: 20.08.2025
(73) Proprietor: Nokia Technologies Oy, 02610 Espoo (FI)
(72) Inventor: KAIKKONEN, Jorma, 90800 Oulu (FI); HVIID, Jan Torst, 9270 Klarup (DK); VENKATRAMAN, Ganesh, 90540 Oulu (FI); KINNUNEN, Pasi Eino Tapio, 90240 Oulu (FI); SETHI, Alok, 90620 Oulu (FI); BHATOOLAUL, David, Swindon, SN25 2HD (GB)
(74) Representative: Bryers Intellectual Property Ltd

(56) References cited:
- WO-A1-2024/026580
- US-A1- 2021 329 550
- DAVID BHATOOLAUL ET AL: "L1 signal design and procedures for low power WUS", vol. 3GPP RAN 1, no. Incheon, KR; 20230522 - 20230526, 15 May 2023 (2023-05-15), XP052309878, Retrieved from the Internet <URL:https://www.3gpp.org/ftp/TSG_RAN/WG1_RL1/TSGR1_113/Docs/R1-2304417.zip R1-2304417.docx> [retrieved on 20230515]
- WAGNER SEBASTIAN ET AL: "Low-Power Wake-Up Signal Design in 3GPP Release 18", 2023 IEEE CONFERENCE ON STANDARDS FOR COMMUNICATIONS AND NETWORKING (CSCN), IEEE, 6 November 2023 (2023-11-06), pages 222 - 227, XP034559369, DOI: 10.1109/CSCN60443.2023.10453166

## Description

### FIELDS

Various example embodiments of the present disclosure generally relate to the field of telecommunication and in particular, to methods, devices, apparatuses and computer readable storage medium for a dynamic transmission of a wake-up signal.

### BACKGROUND

A low power wake-up signal (LP-WUS) is being developed for New Radio (NR). One objective is to study and evaluate Layer 1 (L1) procedures and higher-layer protocol changes where are needed to support a wake up (or wake-up) signal. The study may consider the usage of a separate low power receiver at user equipment (UE) and evaluate how the UE power consumption may be reduced. An intention is that a main radio or a main receiver of the UE (which may be an ordinary transceiver) may be in a sleep mode (or even powered off) for power saving and be activated upon reception of the wake-up signal from a network. For example, the network may trigger the UE to wake up when needed in an event-driven manner. The network may transmit to the UE the wake-up signal which may be monitored for by a low power receiver at the UE. When a UE receives the WUS, the low power receiver may trigger the wake-up of a main receiver and communications via the main receiver may start. Otherwise, the main radio is OFF or kept in a deep sleep mode. The low power receiver may be operated in an always "ON" manner with very low power consumption. It is expected that the low power receiver will consume less power compared to the ordinary transceiver.

WO2024/026580 and US20211329550 disclose background in the technical field.

### SUMMARY

In a first aspect of the present disclosure, there is provided a first apparatus. The first apparatus comprises at least one processor; and at least one memory storing instructions that, when executed by the at least one processor, cause the first apparatus at least to: receive a configuration indicating a maximum number of segments of a wake-up signal; receive a first indication related to a number of active segments of the wake-up signal; and detect content of the wake-up signal associated with the first apparatus, based on at least the configuration and the first indication.

In some embodiments, the content may comprise a paging monitoring indication associated with the first apparatus.

In some embodiments, the paging monitoring indication may be associated with a group of apparatuses including the first apparatus.

In some embodiments, the configuration may be received in at least one of radio resource control signaling, system information or dedicated signaling.

In some embodiments, the configuration may comprise a wake-up signal configuration, the wake-up signal configuration further indicating at least one of: a size of a segment of the wake-up signal, activation of at least one dynamic indication of the wake-up signal, or one or more segments of the wake-up signal associated with a paging monitoring indication of the first apparatus.

In some embodiments, the first indication may comprise at least one of: the number of active segments being equal to a number of segments of the wake-up signal carrying different information, or a divisor of the maximum number being equal to a number of groups of segments of the wake-up signal, one group of the number of groups of segments being active and carrying same information.

In some embodiments, the first apparatus may receive a second indication of one or more segments of the wake-up signal assigned to the first apparatus.

In some embodiments, the first apparatus may receive a third indication of mapping between a group of segments of the wake-up signal and the first apparatus.

In some embodiments, the first apparatus may receive a third indication of mapping the plurality of segments comprise a group of segments mapped to the first apparatus and carrying same information, or the plurality of segments comprise a group of segments mapped to the first apparatus and carrying different parts of information.

In some embodiments, the first apparatus may receive a third indication of mapping the group of segments are consecutive, interleaved or permutated.

In some embodiments, the first apparatus may receive a fourth indication of a number of on and off periods of on-off keying modulation during a time period for the on-off keying modulation in a segment of the wake-up signal; and detect the content of the wake-up signal further based on the fourth indication.

In some embodiments, the number of on and off periods may be indicated for a segment of the wake-up signal or for the wake-up signal.

In some embodiments, a segment of the wake-up signal may carry a paging monitoring indication associated with a plurality of sub-groups of apparatuses; and the segment of the wake-up signal contains a first information sequence indicating that a first sub-group of the plurality of sub-groups of apparatuses are paged, and the first information sequence is different from a second information sequence indicating that a second sub-group of the plurality of sub-groups of apparatuses are paged.

In some embodiments, a segment of the wake-up signal may carry a paging monitoring indication associated with a plurality of sub-groups of apparatuses; and the segment of the wake-up signal contains at least one of: an information sequence mapped to a sub-group of the plurality of sub-groups of apparatuses, or an index of a sub-group of the plurality of sub-groups of apparatuses.

In some embodiments, at least one of the first, second, third or fourth indication may be carried via at least one of a synchronization signal or the wake-up signal.

In some embodiments, the at least one of the first, second, third or fourth indication may be carried in an information field of the LP-SS, or provided by changing at least at least a part of the LP-SS.

In some embodiments, the at least one of the first, second, third or fourth indication may be received via a preamble of the wakeup signal.

In some embodiments, the wake-up signal may comprise a low power wake-up signal.

In a second aspect of the present disclosure, there is provided a second apparatus. The second apparatus comprises at least one processor; and at least one memory storing instructions that, when executed by the at least one processor, cause the second apparatus at least to: transmit, to a first apparatus, a configuration indicating a maximum number of segments of a wake-up signal; transmit, to the first apparatus, a first indication related to a number of active segments of the wake-up signal; and transmit, to the first apparatus, the wake-up signal including a plurality of segments to carry content associated with the first apparatus, based on at least the configuration and the first indication.

In a third aspect the present disclosure, there is provided an apparatus. The apparatus comprises at least one processor; and at least one memory storing instructions that, when executed by the at least one processor, cause the apparatus at least to: receive a configuration indicating at least a maximum number of segments of a wake-up signal; receive a first indication related to a number of active segments of the wake-up signal; and detect content of the wake-up signal associated with the apparatus, using at least one of additional or repeated information in a plurality of segments of the wake-up signal.

In some embodiments, the content may comprise a paging monitoring indication associated with the apparatus.

In some embodiments, the apparatus may receive a second indication of one or more segments of the wake-up signal assigned to the apparatus.

In some embodiments, the apparatus may receive a third indication of mapping between a group of segments of the wake-up signal and the apparatus.

In some embodiments, the plurality of segments comprise a group of segments mapped to the apparatus, each segment of the group carrying the same information, and the apparatus may process the group of segments as repetitions to detect the content.

In some embodiments, the plurality of segments comprise a group of segments mapped to the apparatus, the segments of the group carrying different parts of information, and the apparatus may combine the group of segments to detect the content.

In some embodiments, the apparatus may detect the content of the wake-up signal using information of a plurality of segments of the wake-up signal assigned to the apparatus, based on the number of active segments being equal to the maximum number or greater than a half of the maximum number.

In some embodiments, the apparatus may detect the content of the wake-up signal by using information of a group of segments of the wake-up signal, based on the number of active segments being equal to or less than a half of the maximum number.

In some embodiments, the apparatus may detect the content of the wake-up signal by combining information in different segments of the wake-up signal.

In some embodiments, the apparatus may detect the content of the wake-up signal by combining information of one or more segments of the wake-up signal assigned to the apparatus and information of one or more segments of the wake-up signal unassigned to the apparatus, based on the number of active segments being less than the maximum number.

In some embodiments, the wake-up signal may comprise a low power wake-up signal.

In a fourth aspect of the present disclosure, there is provided a method. The method comprises: receiving a configuration of a maximum number of segments of a wake-up signal; receiving a first indication related to a number of active segments of the wake-up signal; and detecting content of the wake-up signal associated with the first apparatus, based on at least the configuration and the first indication.

In a fifth aspect of the present disclosure, there is provided a method. The method comprises: transmitting, to a first apparatus, a configuration of a maximum number of segments of a wake-up signal; transmitting, to the first apparatus, a first indication related to a number of active segments of the wake-up signal; and transmitting, to the first apparatus, the wake-up signal including a plurality of segments to carry content associated with the first apparatus, based on at least the configuration and the first indication.

In a sixth aspect of the present disclosure, there is provided a method. The method comprises: receiving a configuration indicating at least a maximum number of segments of a wake-up signal; receiving a first indication related to a number of active segments of the wake-up signal; and detecting content of the wake-up signal associated with the apparatus, using at least one of additional or repeated information in a plurality of segments of the wake-up signal.

In a seventh aspect of the present disclosure, there is provided a first apparatus. The first apparatus comprises means for receiving a configuration of a maximum number of segments of a wake-up signal; means for receiving a first indication related to a number of active segments of the wake-up signal; and means for detecting content of the wake-up signal associated with the first apparatus, based on at least the configuration and the first indication.

In an eighth aspect of the present disclosure, there is provided a second apparatus. The second apparatus comprises means for transmitting, to a first apparatus, a configuration of a maximum number of segments of a wake-up signal; means for transmitting, to the first apparatus, a first indication related to a number of active segments of the wake-up signal; and means for transmitting, to the first apparatus, the wake-up signal including a plurality of segments to carry content associated with the first apparatus, based on at least the configuration and the first indication.

In a ninth aspect of the present disclosure, there is provided an apparatus. The apparatus comprises means for receiving a configuration indicating at least a maximum number of segments of a wake-up signal; means for receiving a first indication related to a number of active segments of the wake-up signal; and means for detecting content of the wake-up signal associated with the apparatus, using at least one of additional or repeated information in a plurality of segments of the wake-up signal.

In a tenth aspect of the present disclosure, there is provided a computer readable medium. The computer readable medium comprises instructions stored thereon for causing an apparatus to perform at least the method according to any of the fourth, fifth or sixth aspect.

It is to be understood that the Summary section is not intended to identify key or essential features of embodiments of the present disclosure, nor is it intended to be used to limit the scope of the present disclosure. Other features of the present disclosure will become easily comprehensible through the following description.

### BRIEF DESCRIPTION OF THE DRAWINGS

Some example embodiments will now be described with reference to the accompanying drawings, where:
FIG. 1 illustrates an example communication environment in which example embodiments of the present disclosure can be implemented;
FIG. 2 illustrates example state transition of a receiver of a device according to some example embodiments of the present disclosure;
FIG. 3 illustrates an example signalling flow of communication in accordance with some embodiments of the present disclosure;
FIG. 4 illustrates an example LP-WUS channel configuration in accordance with some embodiments of the present disclosure;
FIG. 5 illustrates possible gNB transmissions when grouping of segments is signaled with *Nₘₐₓ* = 4 in accordance with some embodiments of the present disclosure;
FIG. 6 illustrates an example of a synchronization sequence for LP-SS in accordance with some embodiments of the present disclosure;
FIG. 7 illustrates an example UE LP-WUS channel detection procedure based on number of active segments in accordance with some embodiments of the present disclosure;
FIG. 8 illustrates an example possible gNB transmissions in accordance with some embodiments of the present disclosure;
FIG. 9 illustrates an example flowchart of a method implemented at a first apparatus according to some example embodiments of the present disclosure;
FIG. 10 illustrates an example flowchart of a method implemented at a second apparatus according to some example embodiments of the present disclosure;
FIG. 11 illustrates an example flowchart of a method implemented at a first apparatus according to some example embodiments of the present disclosure;
FIG. 12 illustrates a simplified block diagram of a device that is suitable for implementing example embodiments of the present disclosure; and
FIG. 13 illustrates a block diagram of an example computer readable medium in accordance with some example embodiments of the present disclosure.

Throughout the drawings, the same or similar reference numerals represent the same or similar element.

### DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. Embodiments described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first," "second" and the like may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the listed terms.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used herein, unless stated explicitly, performing a step "in response to A" does not indicate that the step is performed immediately after "A" occurs and one or more intervening steps may be included.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as New Radio (NR), Long Term Evolution (LTE), LTE-Advanced (LTE-A), Wideband Code Division Multiple Access (WCDMA), High-Speed Packet Access (HSPA), Narrow Band Internet of Things (NB-IoT) and so on. Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the fifth generation (5G) and the sixth generation (6G) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), an NR NB (also referred to as a gNB), a Remote Radio Unit (RRU), a radio header (RH), a remote radio head (RRH), a relay, an Integrated Access and Backhaul (IAB) node, a low power node such as a femto, a pico, a non-terrestrial network (NTN) or non-ground network device such as a satellite network device, a low earth orbit (LEO) satellite and a geosynchronous earth orbit (GEO) satellite, an aircraft network device, and so forth, depending on the applied terminology and technology. In some example embodiments, radio access network (RAN) split architecture comprises a Centralized Unit (CU) and a Distributed Unit (DU) at an IAB donor node. An IAB node comprises a Mobile Terminal (IAB-MT) part that behaves like a UE toward the parent node, and a DU part of an IAB node behaves like a base station toward the next-hop IAB node.

The term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (loT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. The terminal device may also correspond to a Mobile Termination (MT) part of an IAB node (e.g., a relay node). In the following description, the terms "terminal device", "communication device", "terminal", "user equipment" and "UE" may be used interchangeably.

As used herein, the term "resource," "transmission resource," "resource block," "physical resource block" (PRB), "uplink resource," or "downlink resource" may refer to any resource for performing a communication, for example, a communication between a terminal device and a network device, such as a resource in time domain, a resource in frequency domain, a resource in space domain, a resource in code domain, or any other resource enabling a communication, and the like.

As discussed above, the LP-WUS is being developed for NR. The LP-WUS is currently considered for both an IDLE and/or INACTIVE mode and a CONNECTED mode. Current discussions mainly focus on downlink (DL) reception where the LP-WUS may be used to wake up the main radio to receive a physical downlink control channel (PDCCH) and/or a physical downlink shared channel (PDSCH), e.g., for paging or other data. For both the IDLE and/or INACTIVE and CONNECTED modes, the following candidates for content of LP-WUS may be used: information on which user(s) is/are targeted by the LP-WUS, e.g., UE-group, UE-subgroup or UE-ID. The above the information may be explicitly or implicitly indicated.

To enable a low power wake-up receiver (LP-WUR) to maintain synchronization to a cell, introduction of low power synchronization signal (LP-SS) is considered. At least for the LP-WUR that cannot receive an existing primary synchronization signal (PSS) and/or secondary synchronization signal (SSS), periodic LP-SS signal is beneficial for the following functionality: radio resource management (RRM) measurements by the LP-WUR, if supported; at least coarse time synchronization of the LP-WUR; and at least coarse frequency synchronization of the LP-WUR.

Additional periodic LP-SS system overhead depends on LP-SS periodicity, system bandwidth (BW), beams and resource required to fulfil the target functionality and so on. A periodic signal if used for coarse synchronization may reduce overhead of a signal preceding a LP-WUS, if any. The LP-SS may be designed to be common among UE groups (cell-specific) and thus further reduce system overhead. The LP-WUR may receive an existing PSS and/or SSS potentially assisted by a physical broadcast channel (PBCH) demodulation reference signal (DMRS) an/or a tracking reference signal (TRS) for synchronization. For such a LP-WUR, existing PSS/SSS potentially assisted by PBCH DMRS/TRS may be used for above functionality. Periodic LP-SS coverage may be equal to or better than that of an LP-WUS. For fine time and frequency synchronization, a signal (e.g. preamble) preceding or as a part of the LP-WUS may be used. The structure of the LP-SS may be a sequence plus a message with encoded bits, if the information about activation and deactivation of LP-WUS monitoring are carried by the LP-SS.

An LP-WUS design may be commonly applicable to both the IDLE and/or INACTIVE and CONNECTED modes. The following may be specified: an on-off keying (OOK) (OOK-1 and/or OOK-4) based LP-WUS with overlaid orthogonal frequency division multiplexing (OFDM) sequence(s) over an OOK symbol. Further, the LP-WUS design may ensure that for IDLE and/or INACTIVE operations, the same information is delivered irrespective of an LP-WUR type. The OFDM sequence may carry information. In addition, at least duty-cycled monitoring of LP-WUS is supported.

For the IDLE and/or INACTIVE mode, a procedure and configuration of the LP-WUS may be specified to indicate paging monitoring triggered by the LP-WUS, including at least configuration, sub-grouping, and entry and/or exit conditions for LP-WUS monitoring. The LP-SS with periodicity with *Y*ms for LP-WUR may be specified for synchronization and/or RRM for a serving cell. The LP-SS is based on an OOK-1 and/or OOK-4 waveform with or without overlaid OFDM sequences. For the LP-WUR that may receive the existing PSS and/or SSS, the existing PSS and/or SSS may be used for synchronization and RRM, instead of the LP-SS. For the parameter Y, 320ms may be a start point. Moreover, the following may be specified: further RRM relaxation of a UE main radio (MR) for both serving and neighbor cell measurements, and UE serving cell RRM measurement offloaded from the MR to the LP-WUR, including the necessary conditions.

For the CONNECTED mode, procedures may be specified to allow UE MR PDCCH monitoring triggered by the LP-WUS, including an activation and deactivation procedure of LP-WUS monitoring. In CONNECTED mode, UE MR ultra-deep sleep is not considered, and UE RRM and/or radio link monitoring (RLM) and/or beam failure detection (BFD) and/or sidelink control information (SCI) measurements are performed by the MR. The target coverage of the LP-WUS and the LP-SS may be the coverage of physical uplink shared channel (PUSCH) for message3. The optimization of the LP-WUS signal design for idle and/or inactive mode is prioritized over the optimization for connected mode.

In Release-19 (Rel-19), the LP-WUS may be used to trigger (legacy) paging monitoring such as a paging occasion (PO) or a paging early indication (PEI)). It is expected that it will consume significantly less power compared to the NR transceiver, by designing a simple signal (e.g., WUS) and the use of dedicated hardware for its monitoring, which is only able to receive the WUS.

Also, it is considered that sub-grouping, similarly as for an Release-17 PEI, would be supported to reduce the unnecessary wakeups of the MR. This is beneficial for operation with a low power radio (LR), as the effort (e.g., a power consumption cost) needed to wake the MR from a lower power state may be high. Frequent MR wakeups from ultra deep sleep states (where all or most MR functions are turned off) may result in a significant decrease in power saving gains. Using sub-grouping UEs in a PO may reduce the unnecessary wakeups (when paging is not targeted to the given UE), while it implies higher information payload. The number of sub-groups considered range from 4 to 8. Also, as in the Release-17 PEI design, more than one PO could be mapped to the same LP-WUS so that for each PO there would be individual bits to trigger the paging monitoring.

In context of an OOK signal, the number of transitions within (NR) OFDM symbol, denoted as M (where M represents any positive number), could be varied. In good coverage conditions, higher M (e.g., M=4) could be used, while to transmit signal reliably with good coverage, lower M, e.g., M=1, could be used. Using lower M results lower data rate for the OOK modulation, thereby reducing the spectral efficiency, and increasing the footprint (overhead) of the LP-WUS. As for IDLE and/or Inactive mode operation, the LP-WUS is expected to be beam swept similarly as legacy broadcast signals, such as paging and synchronization signal block (SSB), the overhead in multiplied by number of used SSBs.

Thus, in a traditional design, the channel needs to be dimensioned based on the worst case UEs, implying that if there is a desire to reduce the overhead with low data rate modulation, the information payload would need to be reduced. This would prevent or limit the scale of sub-grouping that may be applied with limited payload.

Due to diverse signal conditions seen by the main radios (MRs) in the cell, not all LRs may achieve the same coverage. Thus, we cannot ensure all the LRs may receive a particular modulation scheme used for OOK scheme. Thus, it may be wiser to dynamically switch the LP-WUS scheme depending on the detectability or response from the LRs in terms of paging response. As noted above, the main scope of the LP-WUS is to enable power saving at the UE.

Example embodiments of the present disclosure provides a dynamic transmission solution for a wake-up signal. In the solution, a wake-up signal is partitioned in segments in which each a paging monitoring indication for a group may be sent. An apparatus (such as a UE) receives a configuration of a maximum number of segments of the wake-up signal. Moreover, the apparatus is dynamically indicated with the number of active segments of the wake-up signal. The apparatus detects associated content of the wake-up signal by taking both the configuration and the indication into account. In this way, power saving may be achieved, and power consumption may be reduced.

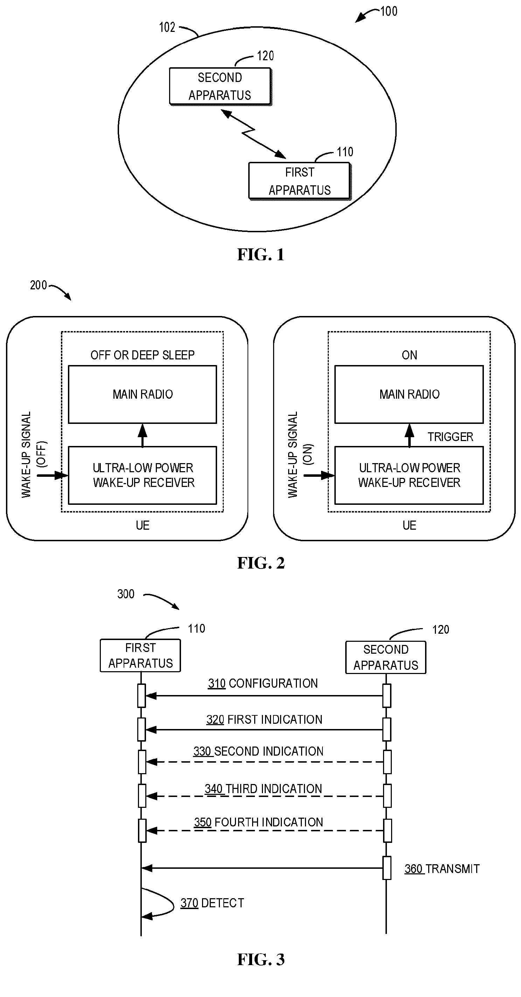

FIG. 1 illustrates an example communication environment 100 in which example embodiments of the present disclosure may be implemented. In the communication environment 100, a plurality of communication devices, comprising a first apparatus 110 and a second apparatus 120, may communicate with each other. In some example embodiments, the first apparatus 110 may operate as a terminal device and the second apparatus 120 may operate as a network device serving the terminal device. The serving area of the second apparatus 120 may be called a cell 102. In some example embodiments, the first apparatus 110 may be operative to implement a smartphone device.

It is to be understood that the number of devices and their connections shown in FIG. 1 are only for the purpose of illustration without suggesting any limitation. The communication environment 100 may include any suitable number of devices configured to implement example embodiments of the present disclosure. Although not shown, it would be appreciated that one or more additional devices may be located in the cell 102, and one or more additional cells served by the second apparatus 120 or another device may be deployed in the communication environment 100.

In the following, for the purpose of illustration, some example embodiments are described with the first apparatus 110 operating as a terminal device and the second apparatus 120 operating as a network device. However, in some example embodiments, operations described with respect to a terminal device may be implemented at a network device or other devices, and operations described with respect to a network device may be implemented at a terminal device or other devices.

In some example embodiments, if the first apparatus 110 is a terminal device and the second apparatus 120 is a network device, a link from the second apparatus 120 to the first apparatus 110 is referred to as a DL, while a link from the first apparatus 110 to the second apparatus 120 is referred to as an uplink (UL). In DL, the second apparatus 120 is a transmitting (TX) device (or a transmitter), and the first apparatus 110 is a receiving (RX) device (or a receiver). In UL, the first apparatus 110 is a TX device (or a transmitter), and the second apparatus 120 is a RX device (or a receiver). If both the first apparatus 110 and the second apparatus 120 are terminal devices, a link between two terminal devices is referred to as a sidelink (SL). In SL, one of the first and second devices 110 and 120 is a TX device (or a transmitter), and the other of the first and second devices 110 and 120 is a RX device (or a receiver).

Communications in the communication environment 100 may be implemented according to any proper communication protocol(s), comprising, but not limited to, cellular communication protocols of the first generation (1G), the second generation (2G), the third generation (3G), the fourth generation (4G), the fifth generation (5G), the sixth generation (6G), and the like, wireless local network communication protocols such as Institute for Electrical and Electronics Engineers (IEEE) 802.11 and the like, and/or any other protocols currently known or to be developed in the future. Moreover, the communication may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future.

In various embodiments, the first apparatus 110 is capable of monitoring for a wake-up signal (such as a LP-WUS) and includes a first receiver and a second receiver. The first receiver may monitor for a low power wake-up signal and may be a low power receiver (such as a simple receiver with an envelope detector).

FIG. 2 shows example state transition of the first apparatus 110 according to some example embodiments of the present disclosure. As shown in FIG. 2, a network triggers the first apparatus 110 to wake up exactly when needed in an event-driven manner, by transmitting a special WUS to the first apparatus 110, which may be monitored by the dedicated low-power WUS receiver at the first apparatus 110. When the first apparatus 110 receives the WUS, the WUS receiver may trigger the wake-up of the ordinary NR transceiver and communication may start. Thus, the ultra-low power receiver wakes up the main radio and otherwise, the main radio is OFF or kept in a deep sleep mode.

FIG. 3 illustrates a signalling flow 300 of communication in accordance with some embodiments of the present disclosure. For the purposes of discussion, the signalling flow 300 will be discussed with reference to FIG. 1, for example, by using the first apparatus 110 and the second apparatus 120.

Merely for a better understanding, in the example of FIG. 3, the first apparatus 110 may be operated as a terminal apparatus and the second apparatus 120 may be operated as a network apparatus.

As shown in FIG. 3, the first apparatus 110 receives (310) a configuration indicating a maximum number of segments of a wake-up signal. In some embodiments, the configuration may be received in at least one of RRC signaling, system information (SI) or dedicated signaling.

In some embodiments, the configuration may comprise a wake-up signal configuration, and the wake-up signal configuration further indicates at least one of: a size of a segment of the wake-up signal, activation of at least one dynamic indication of the wake-up signal, or one or more segments of the wake-up signal associated with a paging monitoring indication of the first apparatus 110.

In an example, the wake-up signal may be a LP-WUS. In this example, the first apparatus 110 may determine based on the LP-WUS configuration, what is the LP-WUS and segment(s) in LP-WUS associated to a paging monitoring indication (such as a PO) of the first apparatus 110.

In an example, the LP-WUS (as an example of the wake-up signal) may be transmitted in an LP-WUS channel. In an example, the first apparatus 110 may be configured by higher layers with the LP-WUS channel (via System Information (SI) or via dedicated signalling), including at least one of maximum number of segments, size of the segment(s), presence and adaptation range of dynamic indication for LP-WUS (in LP-SS and/or in LP-WUS).

In some example embodiments, the plurality of segments may comprise a group of segments mapped to the first apparatus 110 and carrying same information. Alternatively, in some embodiments, the plurality of segments may comprise a group of segments mapped to the first apparatus 110 and carrying different parts of information. In some example embodiments, the group of segments may be consecutive, interleaved or permutated.

In an example, the segments that are grouped together may be mapped to the LP-WUS channel in consecutive manner. In other possible implementations, the grouped segments are interleaved and/or permutated so that segment belonging to different groups are transmitted in consecutive manner. In an example, the segments belonging to same group (carrying same logical information content) could configured to carry same physical layer (ON/OFF) sequence or information symbols as repetitions. In other possible implementations, the segments could carry different sequence or information symbols that could be concatenated by receiver to determine the total sequence or information codeword.

As shown in FIG. 3, the first apparatus 110 receives (320) an indication (referred to as a first indication) related to a number of active segments of the wake-up signal. In some embodiments, the first indication comprises at least one of: the number of active segments being equal to a number of segments of the wake-up signal carrying different information, or a divisor of the maximum number being equal to a number of groups of segments of the wake-up signal, one group of the number of groups of segments being active and carrying same information. In an example, the indication of the number of (active) segments may be indicated directly (*N*_{act}), while in other implementations the indications could be done in form of a divisor (*M*_{div}, *N*_{act} = *N*ₘₐₓ/*M*_{div}),

In an example, in the case that the wake-up signal comprises an LP-WUS, the first apparatus 110 may be configured (by an RRC or SI) with the maximum number of segments in the LP-WUS channel, denoted as *N*ₘₐₓ, and depending on the further configuration and/or information, the first apparatus 110 may be informed dynamically what is the number of active (actually used) segments that may be assumed to be carrying different information or same information (active segments; *N*_{act}). If the number of active segments is less than the maximum number of segments configured for the LP-WUS channel, segments are grouped together, and the first apparatus 110 may assume that these segments carry same logical information content and the first apparatus 110 may use this information in reception (e.g. treated as repetitions). The mapping of which group of segments belongs to which UEs may be indicated using LP-SS or LP-WUS.

In some example embodiments, the first indication may be carried via at least one of a synchronization signal or the wake-up signal. In some example embodiments, the first indication may be carried in an information field of the LP-SS, or provided by changing at least at least a part of the LP-SS.

In an embodiment, an LP-SS channel, which carries an LP-SS (as an example of the synchronization signal) may be used to indicate to the first apparatus 110, how many segments to assume be active in forth coming LP-WUS channel. In some example embodiments, this information may be applied to the LP-SS as additional information fields. In an example, it may be provided by changing the LP-SS signal, such as sequence used, in whole LP-SS or in some parts of the LP-SS.

Alternatively, or in addition, the first indication may be received via a preamble of the wakeup signal (such as an LP-WUS). In an example, the information related to the number of active segments is informed to the first apparatus 110 as a part of the LP-WUS message. In an example, this could be carried as a part of the LP-WUS preamble.

In some example embodiments, the first apparatus 110 may receive (330) an indication (referred to as a second indication) of one or more segments of the wake-up signal assigned to the first apparatus 110. Based on the second indication, the first apparatus 110 may be indicated which segments are active (in addition/instead of the number of the active segments). Similar to the first indication, the second indication may be transmitted via either or both of a synchronization signal or a wake-up signal.

In some embodiments, the first apparatus 110 may receive (340) an indication (referred to as a third indication) of mapping between a group of segments of the wake-up signal and the first apparatus 110. Based on the third indication, the first apparatus 110 may determine which group of segments are associated with itself. Similar to the first indication, the third indication may be transmitted via either or both of a synchronization signal or a wake-up signal.

In some example embodiments, a segment of the wake-up signal may carry a paging monitoring indication associated with a plurality of sub-groups of apparatuses. Further, the segment of the wake-up signal may contain a first information sequence indicating that a first sub-group of the plurality of sub-groups of apparatuses are paged, and the first information sequence may be different from a second information sequence indicating that a second sub-group of the plurality of sub-groups of apparatuses are paged.

In an example, when only the number of active segments is informed, the valid sequences that indicate the sub-groups for each paging monitoring indication (e.g., each PO) are different to valid sequences from other POs. This is to ensure that when the first apparatus 110 attempts to detect the LP-WUS channel and combines segments, the detection cannot lead to false alarms.

In some embodiments, a segment of the wake-up signal carries a paging monitoring indication associated with a plurality of sub-groups of apparatuses. Further, the segment of the wake-up signal may contain at least one of: an information sequence mapped to a sub-group of the plurality of sub-groups of apparatuses, or an index of a sub-group of the plurality of sub-groups of apparatuses.

In an example, the segments may carry a paging sub-group indication for paging monitoring. In an example, the segment may contain a sequence mapped to a specific sub-group(s), or information symbols providing index of the sub-group(s).

After the transmissions of the configuration and the indication(s) related to the segments of the wake-up signal, the second apparatus 120 transmits (360) the wake-up signal including a plurality of segments to carry content associated with the first apparatus 110, based on at least the configuration and the first indication. The first apparatus 110 detects (370) content of the wake-up signal associated with the apparatus, using at least one of additional or repeated information in a plurality of segments of the wake-up signal.

In some example embodiments, the content may comprise a paging monitoring indication associated with the first apparatus 110. In some embodiments, the paging monitoring indication may be associated with a group of apparatuses including the first apparatus 110.

In some example embodiments, the first apparatus 110 may be configured, or the first apparatus 110 may determine based on an ID of the first apparatus 110 what is the codeword in the segment(s) associated to the paging monitoring indication (e.g., the PO), that the first apparatus 110 needs to monitor.

In some example embodiments, the plurality of segments comprise a group of segments mapped to the apparatus, each segment of the group carrying the same information. In these example embodiments, the first apparatus 110 may process the group of segments as repetitions to detect the content.

In an example, the first apparatus 110 may adapt the detection of the wake-up signal (such as the LP-WUS) based on the indicated active segments. For example, the first apparatus 110 may use the additional or repeated information in multiple segments for detecting the information content of the LP-WUS channels intended for the first apparatus 110 (or for the PO of the first apparatus 110).

In some example embodiments, the plurality of segments comprise a group of segments mapped to the apparatus, the segments of the group carrying different parts of information. In these example embodiments, the first apparatus 110 may combine the group of segments to detect the content.

In an example, the first apparatus 110 may have multiple hypothesis for detection of LP-WUS channel information, so that the first apparatus 110 may attempt to combine different segments for the detection of the LP-WUS message intended for the first apparatus 110 (or for the PO of the first apparatus 110).

In some example embodiments, the first apparatus 110 may detect the content of the wake-up signal using information of a plurality of segments of the wake-up signal assigned to the apparatus, based on the number of active segments being equal to the maximum number or greater than a half of the maximum number.

In some example embodiments, the first apparatus 110 may detect the content of the wake-up signal by using information of a group of segments of the wake-up signal, based on the number of active segments being equal to or less than a half of the maximum number.

In some example embodiments, the first apparatus 110 may detect the content of the wake-up signal by combining information in different segments of the wake-up signal.

In some example embodiments, the first apparatus 110 may detect the content of the wake-up signal by combining information of one or more segments of the wake-up signal assigned to the apparatus and information of one or more segments of the wake-up signal unassigned to the apparatus, based on the number of active segments being less than the maximum number.

In some embodiments, the first apparatus 110 may receive (350) an indication (referred to as a fourth indication) of a number of on and off periods of on-off keying (OOK) modulation during a time period for the on-off keying modulation in a segment of the wake-up signal. Then, the first apparatus 110 may detect the content of the wake-up signal further based on the fourth indication. In some embodiments, the number of on and off periods may be indicated for a segment of the wake-up signal or for the wake-up signal.

In an example, the network may indicate (e.g., either via an LP-SS or an LP-WUS preamble) the applied number of "ON" and "OFF" periods of OOK modulation during NR symbol for the OOK modulation in the LP-WUS segments.

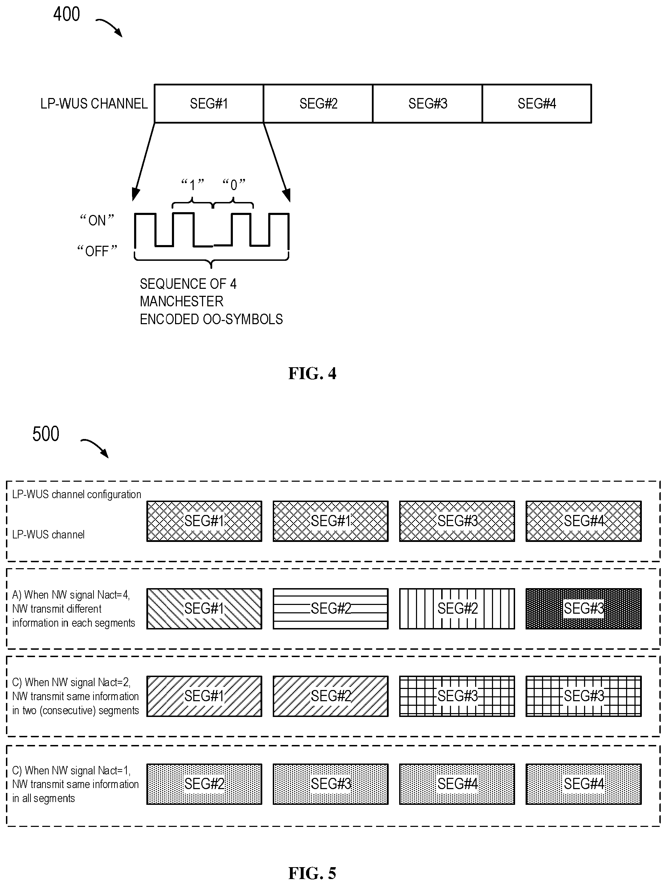

Some example implementations will be described below with reference to FIGS. 4 to 8.

FIG. 4 illustrates an example LP-WUS channel configuration 400 in accordance with some embodiments of the present disclosure.

As shown in FIG. 4, in some embodiments, as a one possible example implementation the LP-WUS channel may be configured with 4 segments, so that each segment may be associated to a PO. Each segment may be configured with a length of 4 bits, that may be OOK modulated and Manchester encoded (as per additional configuration) to result 8 OOK symbols. The LP-WUS channel may be further configured to use OOK modulation with M=2, so that within one NR symbol two transitions may occur. Each segment may be designated to carry OOK modulated sequence indicating which sub-groups of the PO are paged. For this particular example it may be assumed that each PO may be divided to two sub-groups and sequence based indication may be configured so that there is one sequence implying that one of the sub-groups may be paged (triggering the UEs belonging to the sub-group to start paging monitoring with MR), and another may indicate that one or more sub-groups may be paging (triggering all the UEs of the PO to start monitoring paging with MR) and one may indicate that none of the sub-groups of the given PO are triggered. Furthermore, it may be configured, that if the active number of segments is less than maximum, consecutive segments may be assumed to carry same information content.

FIG. 5 illustrates possible gNB transmissions when grouping of segments is signaled with *Nₘₐₓ* = 4 in accordance with some embodiments of the present disclosure.

In some embodiments, when transmitting the LP-WUS to trigger UE to monitor paging, network indicates to the UEs (either via LP-SS, LP-WUS preamble or both) the number of active segments in the LP-WUS channel. In one example network signals to the UE to the number of segments that carry different information so that the information in all active segments can be at least repeated two or four times (e.g. *Nₘₐₓ =* 4) i.e. network signals to how many equal sized segment groups the LP-WUS can be adapted, as illustrated in FIG. 5. In general case, the transmissions with equal repetitions among the segments the grouping could be done over $\frac{{N}_{max}}{{2}^{k}}$ segments, where *k* = {0,1, ... , log₂(*Nₘₐₓ*)}

In other examples, the network indicates the number of active segments, and if *N*_{act} < *N*ₘₐₓ, the network can selectively repeat selected segments, until the total number of segments (with same or different information equals *N*ₘₐₓ. This is also illustrated in FIG. 5.

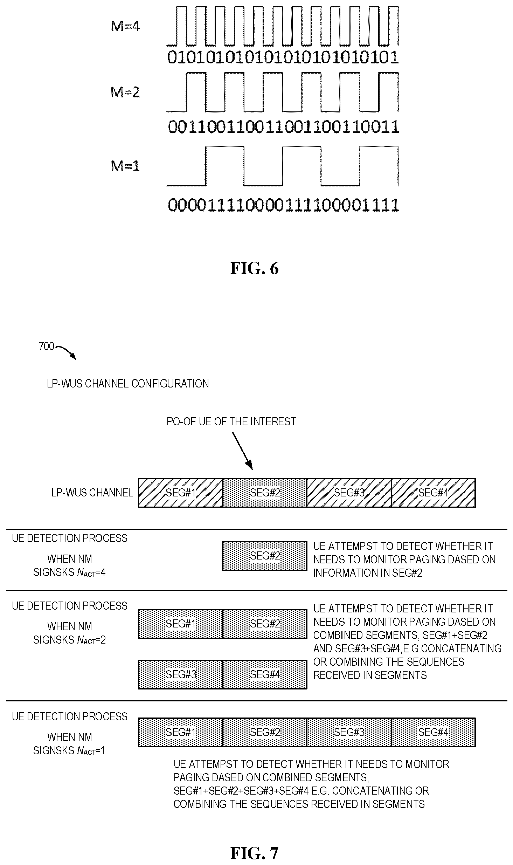

FIG. 6 illustrates an example of a synchronization sequence for an LP-SS in accordance with some embodiments of the present disclosure.

In some embodiments, the automatic detection of the M value may be implemented in the first apparatus 110, as illustrated in FIG. 6. The device will assume max. M value and based on the detected and/or decoded sequence it may determine what M value to be used. In FIG. 6, a simple non-Manchester encoded sequence may be illustrated as a simple example. Any sequence may be used as long it is a pre-defined sequence known by the first apparatus 110.

Alternatively, in some embodiments, it is known that synchronization signal (or sync sequence) may include few bits to indicate the M value for the following data sequence. The sync sequence may be sent with M=1 and based on the decoding of the data bits the following sequence with change M value accordingly.

FIG. 7 illustrates an example UE LP-WUS channel detection procedure 700 based on number of active segments in accordance with some embodiments of the present disclosure.

In some embodiments, when transmitting the LP-WUS to trigger UE to monitor paging, network may indicate to the UEs (either via LP-SS, LP-WUS preamble or both) the number of active segments in the LP-WUS channel. Based on this information, UE(s) may adjust the detection of LP-WUS channel as shown in FIG. 7. For example, if network indicates that the number of active segments, *N*_{act}, may be equal to the maximum (configured) number of segments, *N*ₘₐₓ, or that the number of active segments may be larger than $\frac{{N}_{max}}{2} , \left({N}_{act}>\frac{{N}_{max}}{2}\right)$. UE uses only the information in the assigned segment for the detection. In alternative example, if network indicates that the number of active segments may be two, UE may assume that Seg#1 and Seg#2 carry same information (similarly Seg#3 and Seg#4 will carry same information), use the information in two segments in detection of it's PO specific information, whether to monitor paging. Correspondingly, if network indicates the number of active segments is one, *N*_{act} = 1, UE may assume all the configured segments carry same information and use then in detection of the PO specific information.

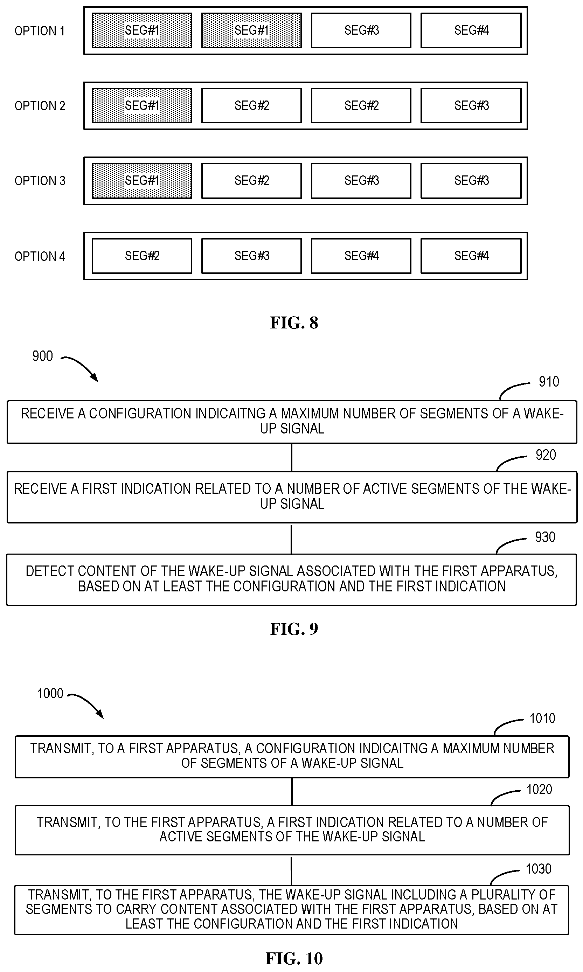

FIG. 8 illustrates example possible gNB transmission formats in accordance with some embodiments of the present disclosure.

In some embodiments, when the network indicates that the number of active segments may be less than the maximum (configured) number of segments, *N*_{act} < *N*ₘₐₓ, UE will attempt multiple hypotheses combing the information to the UE assigned segment (segment associated to the PO UE may be monitoring) so that UE uses the information from only it's own assigned segment (one hypothesis) and other unused segments ( (*N*ₘₐₓ - *N*_{act}) additional hypotheses accounting the information from the unused segments. As shown in FIG. 8, there are four possible gNB LP-WUS transmission formats when the LP-WUS configured with *Nₘₐₓ =* 4 and indicated to have *N*_{act} *=* 3. For example, UE associated to the Segment #1, would do detection hypothesis based on Segment #1.

FIG. 9 shows a flowchart of an example method 900 implemented at a first apparatus in accordance with some example embodiments of the present disclosure. For the purpose of discussion, the method 900 will be described from the perspective of the first apparatus 110 in FIG. 1.

At block 910, the first apparatus 110 receives a configuration indicating a maximum number of segments of a wake-up signal.

At block 920, the first apparatus 110 receives a first indication related to a number of active segments of the wake-up signal.

At block 930, the first apparatus 110 detects content of the wake-up signal associated with the first apparatus 110, based on at least the configuration and the first indication.

In some example embodiments, the content comprises a paging monitoring indication associated with the first apparatus 110.

In some example embodiments, the paging monitoring indication is associated with a group of apparatuses including the first apparatus 110.

In some example embodiments, the configuration is received in at least one of radio resource control signaling, system information or dedicated signaling.

In some example embodiments, the configuration comprises a wake-up signal configuration, the wake-up signal configuration further indicating at least one of: a size of a segment of the wake-up signal, activation of at least one dynamic indication of the wake-up signal, or one or more segments of the wake-up signal associated with a paging monitoring indication of the first apparatus 110.

In some example embodiments, the first indication comprises at least one of: the number of active segments being equal to a number of segments of the wake-up signal carrying different information, or a divisor of the maximum number being equal to a number of groups of segments of the wake-up signal, one group of the number of groups of segments being active and carrying same information.

In some example embodiments, the first apparatus 110 may receive a second indication of one or more segments of the wake-up signal assigned to the first apparatus 110.

In some example embodiments, the first apparatus 110 may receive a third indication of mapping between a group of segments of the wake-up signal and the first apparatus 110.

In some example embodiments, the plurality of segments comprise a group of segments mapped to the first apparatus 110 and carrying same information, or the plurality of segments comprise a group of segments mapped to the first apparatus 110 and carrying different parts of information.

In some example embodiments, the group of segments are consecutive, interleaved or permutated.

In some example embodiments, the first apparatus 110 may a fourth indication of a number of on and off periods of on-off keying modulation during a time period for the on-off keying modulation in a segment of the wake-up signal; and detecting the content of the wake-up signal further based on the fourth indication.

In some example embodiments, the number of on and off periods is indicated for a segment of the wake-up signal or for the wake-up signal.

In some example embodiments, a segment of the wake-up signal carries a paging monitoring indication associated with a plurality of sub-groups of apparatuses; and the segment of the wake-up signal contains a first information sequence indicating that a first sub-group of the plurality of sub-groups of apparatuses are paged, and the first information sequence is different from a second information sequence indicating that a second sub-group of the plurality of sub-groups of apparatuses are paged.

In some example embodiments, a segment of the wake-up signal carries a paging monitoring indication associated with a plurality of sub-groups of apparatuses; and the segment of the wake-up signal contains at least one of: an information sequence mapped to a sub-group of the plurality of sub-groups of apparatuses, or an index of a sub-group of the plurality of sub-groups of apparatuses.

In some example embodiments, at least one of the first, second, third or fourth indication is carried via at least one of a synchronization signal or the wake-up signal.

In some example embodiments, the at least one of the first, second, third or fourth indication is carried in an information field of the LP-SS, or provided by changing at least at least a part of the LP-SS.

In some example embodiments, the at least one of the first, second, third or fourth indication is received via a preamble of the wakeup signal.

In some example embodiments, the wake-up signal comprises a low power wake-up signal.

FIG. 10 shows a flowchart of an example method 1000 implemented at a second apparatus in accordance with some example embodiments of the present disclosure. For the purpose of discussion, the method 1000 will be described from the perspective of the second apparatus 120 in FIG. 1.

At block 1010, the second apparatus 120 transmits, to the first apparatus 110, a configuration indicating a maximum number of segments of a wake-up signal.

At block 1020, the second apparatus 120 transmits, to the first apparatus 110, a first indication related to a number of active segments of the wake-up signal.

At block 1030, the second apparatus 120 transmits, to the first apparatus 110, the wake-up signal including a plurality of segments to carry content associated with the first apparatus 110, based on at least the configuration and the first indication.

All operations and features related to the first apparatus 110 and the second apparatus 120 as described above with reference to FIGS. 1 to 8 are likewise applicable to the methods 900 and 1000 and have similar effects. For the purpose of simplification, the details will be omitted.

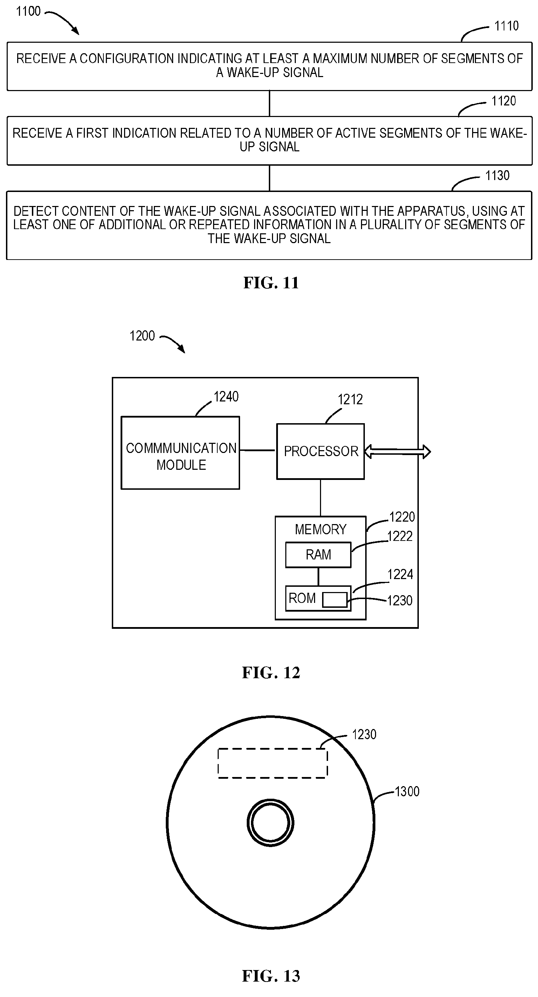

FIG. 11 shows a flowchart of an example method 1100 implemented at an apparatus in accordance with some example embodiments of the present disclosure. For the purpose of discussion, the method 1100 will be described from the perspective of the first apparatus 110 in FIG. 1.

At block 1110, the first apparatus 110 receives a configuration indicating at least a maximum number of segments of a wake-up signal.

At block 1120, the first apparatus 110 receives a first indication related to a number of active segments of the wake-up signal.

At block 1130, the first apparatus 110 detects content of the wake-up signal associated with the apparatus, using at least one of additional or repeated information in a plurality of segments of the wake-up signal.

In some example embodiments, the content comprises a paging monitoring indication associated with the apparatus.

In some example embodiments, the first apparatus 110 may receive a second indication of one or more segments of the wake-up signal assigned to the apparatus.

In some example embodiments the first apparatus 110 may receive a third indication of mapping between a group of segments of the wake-up signal and the apparatus.

In some example embodiments, the first apparatus 110 may process the group of segments as repetitions to detect the content.

In some example embodiments, the first apparatus 110 may combine the group of segments to detect the content.

In some example embodiments, the first apparatus 110 may detect the content of the wake-up signal using information of a plurality of segments of the wake-up signal assigned to the apparatus, based on the number of active segments being equal to the maximum number or greater than a half of the maximum number.

In some example embodiments, the first apparatus 110 may detect the content of the wake-up signal by using information of a group of segments of the wake-up signal, based on the number of active segments being equal to or less than a half of the maximum number.

In some example embodiments, the first apparatus 110 may detect the content of the wake-up signal by combining information in different segments of the wake-up signal.

In some example embodiments, the first apparatus 110 may detect the content of the wake-up signal by combining information of one or more segments of the wake-up signal assigned to the apparatus and information of one or more segments of the wake-up signal unassigned to the apparatus, based on the number of active segments being less than the maximum number.

In some example embodiments, the wake-up signal may comprise a low power wake-up signal.

All operations and features related to the first apparatus 110 as described above with reference to FIGS. 1 to 9 are likewise applicable to the method 1100 and have similar effects. For the purpose of simplification, the details will be omitted.

In some example embodiments, a first apparatus capable of performing the method 900 (for example, the first apparatus 110 in FIG. 1) may comprise means for performing the respective operations of the method 900. The means may be implemented in any suitable form. For example, the means may be implemented in a circuitry or software module. The first apparatus may be implemented as or included in the first apparatus 110 in FIG. 1.

In some example embodiments, the first apparatus comprises means for receiving a configuration indicating a maximum number of segments of a wake-up signal; means for receiving a first indication related to a number of active segments of the wake-up signal; and means for detecting content of the wake-up signal associated with the first apparatus, based on at least the configuration and the first indication.

In some example embodiments, the content comprises a paging monitoring indication associated with the first apparatus.

In some example embodiments, the paging monitoring indication is associated with a group of apparatuses including the first apparatus.

In some example embodiments, the configuration is received in at least one of radio resource control signaling, system information or dedicated signaling.

In some example embodiments, the configuration comprises a wake-up signal configuration, the wake-up signal configuration further indicating at least one of: a size of a segment of the wake-up signal, activation of at least one dynamic indication of the wake-up signal, or one or more segments of the wake-up signal associated with a paging monitoring indication of the first apparatus.

In some example embodiments, the first indication comprises at least one of: the number of active segments being equal to a number of segments of the wake-up signal carrying different information, or a divisor of the maximum number being equal to a number of groups of segments of the wake-up signal, one group of the number of groups of segments being active and carrying same information.

In some example embodiments, the first apparatus further comprises: means for receiving a second indication of one or more segments of the wake-up signal assigned to the first apparatus.

In some example embodiments, the first apparatus further comprises: means for receiving a third indication of mapping between a group of segments of the wake-up signal and the first apparatus.

In some example embodiments, the plurality of segments comprise a group of segments mapped to the first apparatus and carrying same information, or the plurality of segments comprise a group of segments mapped to the first apparatus and carrying different parts of same information.

In some example embodiments, the group of segments are consecutive, interleaved or permutated.

In some example embodiments, the first apparatus further comprises: means for receiving a fourth indication of a number of on and off periods of on-off keying modulation during a time period for the on-off keying modulation in a segment of the wake-up signal; and means for detecting the content of the wake-up signal further based on the fourth indication.

In some example embodiments, the number of on and off periods is indicated for a segment of the wake-up signal or for the wake-up signal.

In some example embodiments, a segment of the wake-up signal carries a paging monitoring indication associated with a plurality of sub-groups of apparatuses; and the segment of the wake-up signal contains a first information sequence indicating that a first sub-group of the plurality of sub-groups of apparatuses are paged, and the first information sequence is different from a second information sequence indicating that a second sub-group of the plurality of sub-groups of apparatuses are paged.

In some example embodiments, a segment of the wake-up signal carries a paging monitoring indication associated with a plurality of sub-groups of apparatuses; and the segment of the wake-up signal contains at least one of: an information sequence mapped to a sub-group of the plurality of sub-groups of apparatuses, or an index of a sub-group of the plurality of sub-groups of apparatuses.

In some example embodiments, at least one of the first, second, third or fourth indication is carried via at least one of a synchronization signal or the wake-up signal.

In some example embodiments, the at least one of the first, second, third or fourth indication is carried in an information field of the LP-SS, or provided by changing at least at least a part of the LP-SS.

In some example embodiments, the at least one of the first, second, third or fourth indication is received via a preamble of the wakeup signal.

In some example embodiments, the wake-up signal comprises a low power wake-up signal.

In some example embodiments, the first apparatus further comprises means for performing other operations in some example embodiments of the method 900 or the first apparatus 110. In some example embodiments, the means comprises at least one processor; and at least one memory storing instructions that, when executed by the at least one processor, cause the performance of the first apparatus.

In some example embodiments, a second apparatus capable of performing the method 1000 (for example, the second apparatus 120 in FIG. 1 may comprise means for performing the respective operations of the method 1000. The means may be implemented in any suitable form. For example, the means may be implemented in a circuitry or software module. The second apparatus may be implemented as or included in the second apparatus 120 in FIG. 1.

In some example embodiments, the second apparatus comprises means for transmitting, to a first apparatus, a configuration indicating a maximum number of segments of a wake-up signal; means for transmitting, to the first apparatus, a first indication related to a number of active segments of the wake-up signal; and means for transmitting, to the first apparatus, the wake-up signal including a plurality of segments to carry content associated with the first apparatus, based on at least the configuration and the first indication.

In some example embodiments, the second apparatus further comprises means for performing other operations in some example embodiments of the method 1000 or the second apparatus 120. In some example embodiments, the means comprises at least one processor; and at least one memory storing instructions that, when executed by the at least one processor, cause the performance of the second apparatus.

In some example embodiments, an apparatus capable of performing the method 1100 (for example, the first apparatus 110 in FIG. 1) may comprise means for performing the respective operations of the method 1100. The means may be implemented in any suitable form. For example, the means may be implemented in a circuitry or software module. The apparatus may be implemented as or included in the first apparatus 110 in FIG. 1.

In some example embodiments, the apparatus comprises means for receiving a configuration indicating at least a maximum number of segments of a wake-up signal; means for receiving a first indication related to a number of active segments of the wake-up signal; and means for detecting content of the wake-up signal associated with the apparatus, using at least one of additional or repeated information in a plurality of segments of the wake-up signal.

In some example embodiments, the content comprises a paging monitoring indication associated with the apparatus.

In some example embodiments, the apparatus further comprises: means for receiving a second indication of one or more segments of the wake-up signal assigned to the apparatus.

In some example embodiments, the apparatus further comprises: means for receiving a third indication of mapping between a group of segments of the wake-up signal and the apparatus.

In some example embodiments, the plurality of segments comprise a group of segments mapped to the apparatus, each segment of the group carrying the same information, the apparatus further comprises: means for processing the group of segments as repetitions to detect the content.

In some example embodiments, the plurality of segments comprise a group of segments mapped to the apparatus, the segments of the group carrying different parts of information, the apparatus further comprises: means for combining the group of segments to detect the content.

In some example embodiments, the apparatus further comprises: means for detecting the content of the wake-up signal using information of a plurality of segments of the wake-up signal assigned to the apparatus, based on the number of active segments being equal to the maximum number or greater than a half of the maximum number.

In some example embodiments, the apparatus further comprises: means for detecting the content of the wake-up signal by using information of a group of segments of the wake-up signal, based on the number of active segments being equal to or less than a half of the maximum number.

In some example embodiments, the apparatus further comprises: means for detecting the content of the wake-up signal by combining information in different segments of the wake-up signal.

In some example embodiments, c the apparatus further comprises: means for detecting the content of the wake-up signal by combining information of one or more segments of the wake-up signal assigned to the apparatus and information of one or more segments of the wake-up signal unassigned to the apparatus, based on the number of active segments being less than the maximum number.

In some example embodiments, the wake-up signal comprises a low power wake-up signal.

In some example embodiments, the apparatus further comprises means for performing other operations in some example embodiments of the method 1100 or the apparatus 110. In some example embodiments, the means comprises at least one processor; and at least one memory storing instructions that, when executed by the at least one processor, cause the performance of the apparatus.

FIG. 12 is a simplified block diagram of a device 1200 that is suitable for implementing example embodiments of the present disclosure. The device 1200 may be provided to implement a communication device, for example, the first apparatus 112 or the second apparatus 120 as shown in FIG. 1. As shown, the device 1200 includes one or more processors 1212, one or more memories 1220 coupled to the processor 1212, and one or more communication modules 1240 coupled to the processor 1212.

The communication module 1240 is for bidirectional communications. The communication module 1240 has one or more communication interfaces to facilitate communication with one or more other modules or devices. The communication interfaces may represent any interface that is necessary for communication with other network elements. In some example embodiments, the communication module 1240 may include at least one antenna.

The processor 1212 may be of any type suitable to the local technical network and may include one or more of the following: general purpose computers, special purpose computers, microprocessors, digital signal processors (DSPs) and processors based on multicore processor architecture, as non-limiting examples. The device 1200 may have multiple processors, such as an application specific integrated circuit chip that is slaved in time to a clock which synchronizes the main processor.

The memory 1220 may include one or more non-volatile memories and one or more volatile memories. Examples of the non-volatile memories include, but are not limited to, a Read Only Memory (ROM) 1224, an electrically programmable read only memory (EPROM), a flash memory, a hard disk, a compact disc (CD), a digital video disk (DVD), an optical disk, a laser disk, and other magnetic storage and/or optical storage. Examples of the volatile memories include, but are not limited to, a random access memory (RAM) 1222 and other volatile memories that will not last in the power-down duration.

A computer program 1230 includes computer executable instructions that are executed by the associated processor 1212. The instructions of the program 1230 may include instructions for performing operations/acts of some example embodiments of the present disclosure. The program 1230 may be stored in the memory, e.g., the ROM 1224. The processor 1212 may perform any suitable actions and processing by loading the program 1230 into the RAM 1222.

The example embodiments of the present disclosure may be implemented by means of the program 1230 so that the device 1200 may perform any process of the disclosure as discussed with reference to FIG. 3 to FIG. 11. The example embodiments of the present disclosure may also be implemented by hardware or by a combination of software and hardware.

In some example embodiments, the program 1230 may be tangibly contained in a computer readable medium which may be included in the device 1200 (such as in the memory 1220) or other storage devices that are accessible by the device 1200. The device 1200 may load the program 1230 from the computer readable medium to the RAM 1222 for execution. In some example embodiments, the computer readable medium may include any types of non-transitory storage medium, such as ROM, EPROM, a flash memory, a hard disk, CD, DVD, and the like. The term "non-transitory," as used herein, is a limitation of the medium itself (i.e., tangible, not a signal) as opposed to a limitation on data storage persistency (e.g., RAM vs. ROM).

FIG. 13 shows an example of the computer readable medium 1120 which may be in form of CD, DVD or other optical storage disk. The computer readable medium 1120 has the program 1230 stored thereon.

Generally, various embodiments of the present disclosure may be implemented in hardware or special purpose circuits, software, logic or any combination thereof. Some aspects may be implemented in hardware, and other aspects may be implemented in firmware or software which may be executed by a controller, microprocessor or other computing device. Although various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

Some example embodiments of the present disclosure also provide at least one computer program product tangibly stored on a computer readable medium, such as a non-transitory computer readable medium. The computer program product includes computer-executable instructions, such as those included in program modules, being executed in a device on a target physical or virtual processor, to carry out any of the methods as described above. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. The program code may be provided to a processor or controller of a general purpose computer, special purpose computer, or other programmable data processing apparatus, such that the program code, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program code or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, although operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, although several specific implementation details are contained in the above discussions, these should not be construed as limitations on the scope of the present disclosure, but rather as descriptions of features that may be specific to particular embodiments. Unless explicitly stated, certain features that are described in the context of separate embodiments may also be implemented in combination in a single embodiment. Conversely, unless explicitly stated, various features that are described in the context of a single embodiment may also be implemented in a plurality of embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. A terminal apparatus comprising:
at least one processor; and
at least one memory storing instructions that, when executed by the at least one processor, cause the terminal apparatus at least to:
receive a configuration indicating at least a maximum number of segments of a wake-up signal;
receive a first indication related to a number of active segments of the wake-up signal, the first indication comprising at least one of:
the number of active segments being equal to a number of segments of the wake-up signal carrying different information, or
a divisor of the maximum number being equal to a number of groups of segments of the wake-up signal, one group of the number of groups of segments being active and carrying same information;
determine, based on the configuration and the first indication, that a plurality of segments of the wake-up signal carry at least one of additional or repeated information; and
detect content of the wake-up signal associated with the terminal apparatus, using the at least one of the additional or repeated information in the plurality of segments of the wake-up signal.

2. The terminal apparatus of claim 1, wherein the content comprises a paging monitoring indication associated with the terminal apparatus.

3. The terminal apparatus of claim 1 or 2, wherein the at least one memory and the at least one processor further cause the terminal apparatus to:
receive a second indication of one or more segments of the wake-up signal assigned to the terminal apparatus.

4. The terminal apparatus of any of claims 1 to 3, wherein the at least one memory and the at least one processor further cause the terminal apparatus to:
receive a third indication of mapping between a group of segments of the wake-up signal and the terminal apparatus.

5. The terminal apparatus of any of claims 1 to 4, wherein the plurality of segments comprise a group of segments mapped to the terminal apparatus, each segment of the group carrying the same information, and the at least one memory and the at least one processor further cause the terminal apparatus to:
process the group of segments as repetitions to detect the content.

6. The terminal apparatus of any of claims 1 to 4, wherein the plurality of segments comprise a group of segments mapped to the terminal apparatus, the segments of the group carrying different parts of information, and the at least one memory and the at least one processor further cause the terminal apparatus to:
combine the group of segments to detect the content.

7. The terminal apparatus of any of claims 1 to 6, wherein the at least one memory and the at least one processor cause the terminal apparatus to:
detect the content of the wake-up signal using information of a plurality of segments of the wake-up signal assigned to the terminal apparatus, based on the number of active segments being equal to the maximum number or greater than a half of the maximum number.

8. The terminal apparatus of any of claims 1 to 6, wherein the at least one memory and the at least one processor cause the terminal apparatus to:
detect the content of the wake-up signal by using information of a group of segments of the wake-up signal, based on the number of active segments being equal to or less than a half of the maximum number.

9. The terminal apparatus of any of claims 1 to 6, wherein the at least one memory and the at least one processor cause the terminal apparatus to:
detect the content of the wake-up signal by combining information in different segments of the wake-up signal.

10. The terminal apparatus of claim 9, wherein the at least one memory and the at least one processor cause the terminal apparatus to:
detect the content of the wake-up signal by combining information of one or more segments of the wake-up signal assigned to the terminal apparatus and information of one or more segments of the wake-up signal unassigned to the terminal apparatus, based on the number of active segments being less than the maximum number.

11. The terminal apparatus of any of claims 1-10, wherein the wake-up signal comprises a low power wake-up signal.

12. A method performed by a terminal apparatus comprising:
receiving a configuration indicating at least a maximum number of segments of a wake-up signal;
receiving a first indication related to a number of active segments of the wake-up signal, the first indication comprising at least one of:
the number of active segments being equal to a number of segments of the wake-up signal carrying different information, or
a divisor of the maximum number being equal to a number of groups of segments of the wake-up signal, one group of the number of groups of segments being active and carrying same information;
determining, based on the configuration and the first indication, a plurality of segments of the wake-up signal carry at least one of additional or repeated information; and
detecting content of the wake-up signal associated with the terminal apparatus, based on the received configuration and the based on the first indication, using at least one of additional or repeated information in a plurality of segments of the wake-up signal.

13. A computer readable medium comprising instructions stored thereon which when executed by a processor of a terminal apparatus causes the terminal apparatus to perform the method of claim 12.

## Patentansprüche

1. Endgerät, umfassend:
mindestens einen Prozessor; und
mindestens einen Speicher, der Anweisungen speichert, die, wenn sie von dem mindestens einen Prozessor ausgeführt werden, das Endgerät zumindest veranlassen:
eine Konfiguration zu empfangen, die mindestens eine maximale Anzahl von Segmenten eines Aufwecksignals angibt;
eine erste Angabe zu empfangen, die sich auf eine Anzahl aktiver Segmente des Aufwecksignals bezieht, wobei die erste Angabe mindestens eines der Folgenden umfasst:
die Anzahl aktiver Segmente ist gleich einer Anzahl von Segmenten des Aufwecksignals, die unterschiedliche Informationen tragen, oder
ein Divisor der maximalen Anzahl ist gleich einer Anzahl von Gruppen von Segmenten des Aufwecksignals, wobei eine Gruppe der Anzahl von Gruppen von Segmenten aktiv ist und dieselbe Information trägt;
auf der Grundlage der Konfiguration und der ersten Angabe zu bestimmen, dass eine Vielzahl von Segmenten des Aufwecksignals mindestens eine von zusätzlicher oder wiederholter Information tragen; und
Inhalt des Aufwecksignals zu detektieren, der dem Endgerät zugeordnet ist, unter Verwendung der mindestens einen von der zusätzlichen oder wiederholten Information in der Vielzahl von Segmenten des Aufwecksignals.

2. Endgerät nach Anspruch 1, wobei der Inhalt eine dem Endgerät zugeordnete Paging Überwachungsangabe umfasst.

3. Endgerät nach Anspruch 1 oder 2, wobei der mindestens eine Speicher und der mindestens eine Prozessor das Endgerät ferner veranlassen:
eine zweite Angabe von einem oder mehreren Segmenten des Aufwecksignals zu empfangen, die dem Endgerät zugewiesen sind.

4. Endgerät nach einem der Ansprüche 1 bis 3, wobei der mindestens eine Speicher und der mindestens eine Prozessor das Endgerät ferner veranlassen:
eine dritte Angabe einer Zuordnung zwischen einer Gruppe von Segmenten des Aufwecksignals und dem Endgerät zu empfangen.

5. Endgerät nach einem der Ansprüche 1 bis 4, wobei die Vielzahl von Segmenten eine Gruppe von Segmenten umfasst, die dem Endgerät zugeordnet sind, wobei jedes Segment der Gruppe dieselbe Information trägt, und der mindestens eine Speicher und der mindestens eine Prozessor das Endgerät ferner veranlassen:
die Gruppe von Segmenten als Wiederholungen zu verarbeiten, um den Inhalt zu detektieren.

6. Endgerät nach einem der Ansprüche 1 bis 4, wobei die Vielzahl von Segmenten eine Gruppe von Segmenten umfasst, die dem Endgerät zugeordnet sind, wobei die Segmente der Gruppe unterschiedliche Teile von Information tragen, und der mindestens eine Speicher und der mindestens eine Prozessor das Endgerät ferner veranlassen:
die Gruppe von Segmenten zu kombinieren, um den Inhalt zu detektieren.

7. Endgerät nach einem der Ansprüche 1 bis 6, wobei der mindestens eine Speicher und der mindestens eine Prozessor das Endgerät veranlassen:
den Inhalt des Aufwecksignals unter Verwendung von Informationen einer Vielzahl von Segmenten des Aufwecksignals zu detektieren, die dem Endgerät zugewiesen sind, auf der Grundlage, dass die Anzahl aktiver Segmente gleich der maximalen Anzahl oder größer als die Hälfte der maximalen Anzahl ist.

8. Endgerät nach einem der Ansprüche 1 bis 6, wobei der mindestens eine Speicher und der mindestens eine Prozessor das Endgerät veranlassen:
den Inhalt des Aufwecksignals unter Verwendung von Informationen einer Gruppe von Segmenten des Aufwecksignals zu detektieren, auf der Grundlage, dass die Anzahl aktiver Segmente gleich oder kleiner als die Hälfte der maximalen Anzahl ist.

9. Endgerät nach einem der Ansprüche 1 bis 6, wobei der mindestens eine Speicher und der mindestens eine Prozessor das Endgerät veranlassen:
den Inhalt des Aufwecksignals zu detektieren, indem Informationen in verschiedenen Segmenten des Aufwecksignals kombiniert werden.

10. Endgerät nach Anspruch 9, wobei der mindestens eine Speicher und der mindestens eine Prozessor das Endgerät veranlassen:
den Inhalt des Aufwecksignals zu detektieren, indem Informationen von einem oder mehreren Segmenten des Aufwecksignals, die dem Endgerät zugewiesen sind, und Informationen von einem oder mehreren Segmenten des Aufwecksignals, die dem Endgerät nicht zugewiesen sind, kombiniert werden, auf der Grundlage, dass die Anzahl aktiver Segmente kleiner als die maximale Anzahl ist.

11. Endgerät nach einem der Ansprüche 1 bis 10, wobei das Aufwecksignal ein Aufwecksignal mit niedriger Leistung umfasst.

12. Verfahren, das von einem Endgerät durchgeführt wird, umfassend:
Empfangen einer Konfiguration, die mindestens eine maximale Anzahl von Segmenten eines Aufwecksignals angibt;
Empfangen einer ersten Angabe, die sich auf eine Anzahl aktiver Segmente des Aufwecksignals bezieht, wobei die erste Angabe mindestens eines der Folgenden umfasst:
die Anzahl aktiver Segmente ist gleich einer Anzahl von Segmenten des Aufwecksignals, die unterschiedliche Informationen tragen, oder
ein Divisor der maximalen Anzahl ist gleich einer Anzahl von Gruppen von Segmenten des Aufwecksignals, wobei eine Gruppe der Anzahl von Gruppen von Segmenten aktiv ist und dieselbe Information trägt;
Bestimmen, auf der Grundlage der Konfiguration und der ersten Angabe, einer Vielzahl von Segmenten des Aufwecksignals, die mindestens eine von zusätzlicher oder wiederholter Information tragen; und
Detektieren von Inhalt des Aufwecksignals, der dem Endgerät zugeordnet ist, auf der Grundlage der empfangenen Konfiguration und der auf der Grundlage der ersten Angabe, unter Verwendung mindestens einer von zusätzlicher oder wiederholter Information in einer Vielzahl von Segmenten des Aufwecksignals.

13. Computerlesbares Medium, umfassend darauf gespeicherte Anweisungen, die, wenn sie von einem Prozessor eines Endgeräts ausgeführt werden, das Endgerät veranlassen, das Verfahren nach Anspruch 12 durchzuführen.

## Revendications

1. Appareil terminal comprenant :
au moins un processeur ; et
au moins une mémoire stockant des instructions qui, lorsqu'elles sont exécutées par l'au moins un processeur, amènent l'appareil terminal au moins à :
recevoir une configuration indiquant au moins un nombre maximal de segments d'un signal de réveil ;
recevoir une première indication relative à un nombre de segments actifs du signal de réveil, la première indication comprenant au moins l'un parmi :
le nombre de segments actifs étant égal à un nombre de segments du signal de réveil portant des informations différentes, ou
un diviseur du nombre maximal étant égal à un nombre de groupes de segments du signal de réveil, un groupe du nombre de groupes de segments étant actif et portant la même information ;
déterminer, sur la base de la configuration et de la première indication, qu'une pluralité de segments du signal de réveil portent au moins l'une parmi une information additionnelle ou une information répétée ; et
détecter un contenu du signal de réveil associé à l'appareil terminal, en utilisant l'au moins une parmi l'information additionnelle ou l'information répétée dans la pluralité de segments du signal de réveil.

2. Appareil terminal selon la revendication 1, dans lequel le contenu comprend une indication de surveillance de radiomessagerie associée à l'appareil terminal.

3. Appareil terminal selon la revendication 1 ou 2, dans lequel l'au moins une mémoire et l'au moins un processeur amènent en outre l'appareil terminal à :
recevoir une deuxième indication d'un ou de plusieurs segments du signal de réveil attribués à l'appareil terminal.

4. Appareil terminal selon l'une quelconque des revendications 1 à 3, dans lequel l'au moins une mémoire et l'au moins un processeur amènent en outre l'appareil terminal à :
recevoir une troisième indication de mappage entre un groupe de segments du signal de réveil et l'appareil terminal.

5. Appareil terminal selon l'une quelconque des revendications 1 à 4, dans lequel la pluralité de segments comprend un groupe de segments mappés à l'appareil terminal, chaque segment du groupe portant la même information, et l'au moins une mémoire et l'au moins un processeur amènent en outre l'appareil terminal à :
traiter le groupe de segments comme des répétitions pour détecter le contenu.

6. Appareil terminal selon l'une quelconque des revendications 1 à 4, dans lequel la pluralité de segments comprend un groupe de segments mappés à l'appareil terminal, les segments du groupe portant des parties différentes d'information, et l'au moins une mémoire et l'au moins un processeur amènent en outre l'appareil terminal à :
combiner le groupe de segments pour détecter le contenu.

7. Appareil terminal selon l'une quelconque des revendications 1 à 6, dans lequel l'au moins une mémoire et l'au moins un processeur amènent l'appareil terminal à :
détecter le contenu du signal de réveil en utilisant des informations d'une pluralité de segments du signal de réveil attribués à l'appareil terminal, sur la base du nombre de segments actifs étant égal au nombre maximal ou supérieur à la moitié du nombre maximal.

8. Appareil terminal selon l'une quelconque des revendications 1 à 6, dans lequel l'au moins une mémoire et l'au moins un processeur amènent l'appareil terminal à :
détecter le contenu du signal de réveil en utilisant des informations d'un groupe de segments du signal de réveil, sur la base du nombre de segments actifs étant égal ou inférieur à la moitié du nombre maximal.

9. Appareil terminal selon l'une quelconque des revendications 1 à 6, dans lequel l'au moins une mémoire et l'au moins un processeur amènent l'appareil terminal à :
détecter le contenu du signal de réveil en combinant des informations dans différents segments du signal de réveil.

10. Appareil terminal selon la revendication 9, dans lequel l'au moins une mémoire et l'au moins un processeur amènent l'appareil terminal à :
détecter le contenu du signal de réveil en combinant des informations d'un ou de plusieurs segments du signal de réveil attribués à l'appareil terminal et des informations d'un ou de plusieurs segments du signal de réveil non attribués à l'appareil terminal, sur la base du nombre de segments actifs étant inférieur au nombre maximal.

11. Appareil terminal selon l'une quelconque des revendications 1 à 10, dans lequel le signal de réveil comprend un signal de réveil à faible puissance.

12. Procédé mis en œuvre par un appareil terminal, comprenant :
la réception d'une configuration indiquant au moins un nombre maximal de segments d'un signal de réveil ;
la réception d'une première indication relative à un nombre de segments actifs du signal de réveil, la première indication comprenant au moins l'un parmi :
le nombre de segments actifs étant égal à un nombre de segments du signal de réveil portant des informations différentes, ou
un diviseur du nombre maximal étant égal à un nombre de groupes de segments du signal de réveil, un groupe du nombre de groupes de segments étant actif et portant la même information ;
la détermination, sur la base de la configuration et de la première indication, qu'une pluralité de segments du signal de réveil portent au moins l'une parmi une information additionnelle ou une information répétée ; et
la détection d'un contenu du signal de réveil associé à l'appareil terminal, sur la base de la configuration reçue et la sur la base de la première indication, en utilisant au moins l'une parmi une information additionnelle ou une information répétée dans une pluralité de segments du signal de réveil.

13. Support lisible par ordinateur comprenant des instructions stockées sur celui-ci qui, lorsqu'elles sont exécutées par un processeur d'un appareil terminal, amènent l'appareil terminal à mettre en œuvre le procédé selon la revendication 12.
